# EUROPEAN PATENT SPECIFICATION

(11) **EP 2 756 259 B1**
(45) Date of publication and mention of the grant of the patent: **13.11.2019**
(21) Application number: 11764667.9
(22) Date of filing: 15.09.2011
(51) Int. Cl.: F42B 5/16, C06B 25/34, C06B 25/18, C06B 45/00, C06B 45/10, C06B 45/12

(54) **NITROGLYCERINE-FREE MULTI-PERFORATED HIGH-PERFORMING PROPELLANT SYSTEM**
NITROGLYZERINFREIES, MEHRFACH PERFORIERTES, LEISTUNGSSTARKES ANTRIEBSSYSTEM
SYSTÈME DE PROPULSION À PERFORATIONS MULTIPLES HAUTE PERFORMANCE, EXEMPT DE NITROGLYCÉRINE

(43) Date of publication of application: 23.07.2014
(73) Proprietor: Nitrochemie Wimmis AG, 3752 Wimmis (CH)
(72) Inventor: SCHAEDELI, Ulrich, CH-1737 Plasselb (CH); ANTENEN, Dominik, CH-3665 Wattenwil (CH); VAMOS, Attila, CH-3116 Mühledorf (CH)
(74) Representative: Keller & Partner Patentanwälte AG
(86) International application number: PCT/CH2011/000219
(87) International publication number: WO 2011/153655

(56) References cited:
- EP-A1- 1 031 547
- EP-A1- 1 118 512
- EP-A1- 1 164 116
- EP-A1- 1 857 429
- EP-A2- 0 822 384
- WO-A1-02/083602
- WO-A2-97/14169
- DE-A1-102004 039 761
- DE-A1-102005 003 108
- DE-C- 95 792

## Description

### Technical Field

The invention concerns a nitroclycerine-free propulsion system in the form of a multi-perforated grain propel-lant based on nitrocellulose and a crystalline energetic compound, which is used for the acceleration of pro-jectiles, and also a method for the manufacture of said propulsion system and its use for accelerating small-caliber and mortar projectiles.

### Prior art

Small caliber arms are of broad variety and are still heavily used and widely spread over a broad range of to-day's civil and military applications. For military applications, they remain the backbone for the war-fighter out in the field, enabling him to perform tactical attack and self-defending missions in a highly flexible and effective way.

For military missions, the calibers of 5.56mm and 7.62mm are playing a dominant role, since they are very popular, widely spread and fielded globally. For each caliber, there is a broad variety of different weapon and ammunition types, each of which typically needs an optimized and adopted propellant in order to get the best possible ballistic performance.

Spherical ball powders are very versatile and have been playing an outstanding role as propulsion source for a variety of small caliber applications, including the important military calibers of 5.56mm and 7.62mm (e.g. S. Faintich, GD-OTS St. Marks Powder, "Advanced ball powder propellant technology", NDIA conference, 2006). Ball powders are composed of a spherical base grain from nitrocellulose and nitroglycerine as the main components, which is then coated with a layer of deterrent, typically dibutyl phthalate, as a burning rate modifier. Depending on the size of the grain diameter and the concentrations of nitroglycerine and deterrent, ball powders can be tuned in such a way that they can be used in a broad caliber range from 5.56mm up to 30mm for firing weapons, but also for mortars with up to 120mm caliber.

About 20 years ago Nitrochemie has started to developed it's own proprietary propulsion family in order to compete with ball powders in the same areas of use. The proprietary generic brand name of this propellant family is "EI", which stands for "Extruded Impregnated". These propellants are typically composed from a cylindrical 1 or 7 perforated base grain composed nitrocellulose, which is coated with nitrogly¬cerine and a deterrent (US Patent 7'473'330 B2, 6. January 2009). Depending on the grain dimension, perforation number and concentration levels of nitroglycerine and deterrent, EI propellants can in principle be made for uses in the same broad caliber ranges for firing weapons and mortars as ball powders.

However, history has shown that the military threat scenarios were dramatically revised during the last ten years. As an example, the classical requirement for home defense has lost some of it's focus and was shifted towards new requirements, e.g. out-of-area missions for peace keeping. Coincidentally, most of these new threats have been taking place in hot climatic zones, e.g. in Afghanistan, Iraq or Somalia. The use and storage of weaponry and ammunition in hot climatic zones has raised to unexpected problems for safe use and stor-age of the ammunition, leading to safety risks for personnel and machinery and partial losses of weapon functionalities, e.g. to a reduced first hit performance. This degradation could be linked in many cases to the propellant, which had non-sufficient chemical and ballistic stability (resistance) towards the harsh thermal loads encountered during these out-of-area missions.

The limited resistance of in-service high performance propellants against excessive heat impact could be associated to the presence of nitroglycerine in the nitrocellulose grain matrix. Since both of the widely used high performance propellant families, namely ball powders and EI propellants, do contain significant amounts of nitroglycerine, both types have encountered to some degree chemical stability problems, which was limit-ing the safe use and storage properties of the respective ammunition types.

Due to the cumbersome properties associated with the use of nitroglycerine in nitrocellulose containing pro-pellants, namely the limited chemical stability capability, but also safety concerns during propellant manufac-turing, Nitrochemie has initiated a search for a new nitroglycerine-free high performing propulsion family. These efforts have culminated in the new proprietary ECL "Extruded Composite Low Sensitivity" propulsion family. In the generic grain formulation, nitroglycerine has been replaced by a crystalline energy carrier, typi-cally hexogen (cyclotrimethylene trinitramine, CAS 121-82-4) or octogen (cyclotetramethylene tetranitra-mine, CAS 2691-41-0). The technology is described in EP 1857429 (A1) from 19. June 2006. During the last years ECL propellants have been successfully developed for a series of high-performance applications where highest possible ballistic output is combined with highest possible chemical and ballistic stability, namely for airplane and helicopter applications where resistance towards high temperatures which occur during mission flight envelopes is crucial. Other applications include APFSDS-T and full caliber rounds in various 30mm con-figurations and extended range mortar applications.

In the past, Nitrochemie has been trying to adapt the new generic ECL propelling technology towards small caliber applications, this with the goal to come up with a viable alternative to the cumbersome nitroglycerine containing in-service propelling solutions. However, Nitrochemie had to learn that this task could not be reached by simple variations of grain geometries and formulation (perforation 1 or 7, web-size, concentra-tions of plasticizer and deterrent). In order to improve energy conversion, a higher progressivity as associ-ated with 7 perforations would have been preferred. However, the relatively large grain dimensions of 7-perforated grains have a negative impact on the maximum achievable charge mass and the tact frequency of the automated loading machines. On the other hand, 1-perforated grains suffered relatively poor energy con-version and therefore reduced ballistic output performance. Additionally, it was found that 1-perforated grains had problems to reach the required peak port pressure needed to ensure the automatic weapon func-tion, especially at cold firing temperatures.

In consequence, it was found that the commonly used 1- and 7-perforated grain geometries were not suited for adapting the nitroglycerine-free ECL propelling technology in such a way that a substitution of in-service nitroglycerine containing ball powders or EI propellants was possible. However, in practice the number of perforations of in-service propellants has been limited to 1 (1 centric perforation), 7 (1 centric perforation, 6 perforations in outer circle) or 19 perforations (1 perforation in center, 6 perforations in middle circle, 12 perforations in outer circle). The reasoning for this situation lies in the believing that only the regular triangu-lar shape of the repeating geometry pattern allows for high conversion during the burning cycle, thereby eliminating the formation of slivers (unburned propellant parts). The grain geometries associated with other numbers of perforations have in the past therefore believed to be unsuited (Ullmann Encyklopädie der tech-nischen Chemie, Bd. 21, Kapitel Sprengstoffe, p. 683).

Methods to change the bulk density of a propellant by modifying the grain shape have been studied in the past. In US Patent 3'754'060 (21. August 1973) T, X, Y or V-shapes were proposed to rise the bulkiness of the powder bed, which means to lower the bulk density. A methodology for rising the bulk density by lowering the bulkiness is not provided. In US Patent 4'386'569 a method for increasing the ballistic performance of a propellant by optimizing the distances between the perforations is described. However, this is applied to very large grains with 37 perforations, which is much too big for the targeted small caliber area of this invention.

There is therefore a need to find a technical solution for providing nitroglycerine-free small caliber propel-lants with similar or better performance properties as current in-service nitroglycerine-containing propel-lants. This includes high energy conversion and therefore high ballistic output in small caliber applications, namely for the calibers 5.56mm and 7.62mm. Additionally, it was recognized that there is a need for grain dimension which are small enough to allow for a good loadability into the respective small-caliber cartridges and to allow for high cycles of the loading machines. Furthermore, there was a need to find a way to achieve high peak port pressures over the whole temperature range from extreme cold up to extreme hot firing tem-peratures in order to ensure that the automated weapon functions under extreme cold and extreme hot cli-matic conditions. Finally, since the maximum possible charge mass of propellant in the small 5.56mm and 7.62mm cartridges is limited, there was a need for finding ways to increase the bulk density of the cylindrical grains in such a way that charge masses similar to spherical ball powders can be loaded. The invention de-scribed how these problems could be solved.

In the past it was found impossible to adopt 1-perforated nitroglycerine-free pro-pellants as a substitute of in-service nitroglycerine containing ball powders or EI propellants. There was therefore a strong need to find a technical solution for increasing the performance of nitroglycerine-free small caliber propellants. The target was to provide a nitroglycerine-free grain propelling system for preferred use in small caliber ammunition, which has high ballistic performance with respect to muzzle velocity, gas peak port pressure and bulk density for maximum charge mass, yielding propellants with similar or better ballistic properties as compared to current in-service propellants with nitroglycerine, thereby avoiding the problems associated with propellants that contain nitroclycerine.

EP 1 857 429 A1 discloses a propellant for projectiles, which is mainly composed of nitrocellulose and which includes a crystalline energy carrier on the basis of nitramine. Further, some small amounts of an inert plasticizer are present. The propellant is provided as a particulate material of cylindrical form, the particles comprising multiple axial perforations, i.e. 1, 7 or 19 axial perforations. The amount of nitramine compound is in the range of 1 - 35 % by weight. The inert plasticizer is homogenously distributed within the matrix of the particulate material or is localized on its surface.

EP 1 164 116 A1 discloses a method of producing a propellant powder with a layered grain structure. The matrix of the powder comprises nitrocellulose with a nitrogen content of 11 - 13.5 % by weight as well as a crystalline energy carrier, such as nitramines, in an amount of 5 - 80 % by weight. Inert substances may be used as plasticizers. The powder is provided in the form of cylindrical particles comprising one or several axial perforations which are produced by extrusion. The particles further comprise a polymeric desensitizer which is diffused into their surface to a depth of 100 - 500 µm.

DE 95 792 C describes a propellant powder with multiple perforations. The powder is in the form of rods having a round, hexagonal or polygonal cross-section, which comprise multiple axial perforations. The powder mainly comprises guncotton. The rods are moulded and cut to a desired length.

DE 10 2005 003 108 A1 discloses a rod-shaped powder which comprises several axial perforations as well as slits or bores arranged transversely to said perforations. The additional slits or bores affect the burning rate of the powder and increase the shape stability thereof. Overall, the arrangement of the perforations and the slits or bores facilitates the disintegration of the rod-shaped powder into powder particles.

EP 1 118 512 A1 is concerned with a moulded body of a composition of a gas generating agent for air bags. The moulded bodies comprise through holes or non-through holes in the number of one, two or more. In a preferred embodiment, the moulded bodies comprise seven through holes. As gas generating compound, one or a mixture selected from the group consisting of triazole derivatives, tetrazole derivatives, guanidine derivatives, azodicaronamide derivatives and hydrazine derivatives is used.

EP 1 031 547 discloses propellant compositions made from a lacquer, which is continuously processed by extrusion to form hollow hardened propellant grains in liquid slurry. The lacquer comprises an organic solvent, stabilizers, optionally an energetic plasticizer and optionally a non-energetic plasticizer. The grains are cylindrical with one or more concentric perforations parallel to the length axis of the grains.

EP 0 822 384 A2 describes propulsion systems with a specific form which enables the provision of powder grains in layers. The polygonal powder grains comprise a multitude of perforations. Further, the grains include notches on their corners. The notches provide flow channels when the grains are arranged in a layer like fashion.

### Summary of the invention

The object of this invention is to provide a new type of nitroglycerine-free grain propellant, which can be preferably used in small caliber ammunition.

The new propellants according to the invention have high ballistic performance with respect to muzzle velocity and gas peak port pressure, and exhibit high bulk density. These features yield to similar or better performance properties as compared to current in-service propellants with nitroglycerine.

This object was solved with the feature in claim 1. According to the invention, the number of perforations of the propellant grain is 4. It was found that these multi-perforated propellant grains have higher ballistic output as compared to the 1-perforated conventional propellants. Additionally, the new propellants according to the invention yield high peak port pressures over the whole temperature range.

Another aspect of the invention is the finding that the new grain geometry leads to higher charge masses and improved loadability.

For a 4-perforated grain two geometric grain shapes are possible: the grain profile can either be round, leading to a cylindrical grain, or rectangular, leading to a cubic grain. It was found that the cubic grain geometry with the rectangular profile have higher bulk density as compared to grains with conventional cylindrical profile with a round profile. This leads to an increase of the maximum possible charge mass. But also the 4-perforated grains with round profile have higher bulk density as compared to conventional 1-perforated grains with round profile. This implies that the rise in bulk density is a general feature of the new multi-perforated grain geometry. Another feature is the good loadability of propellants with the new grain geometry, since the grains are only slightly larger than conventional ball powder grains or 1-perforated propellants.

### Short description of the drawings

The attached drawings illustrate the preferred embodiments of the invention:
- Fig. 1a: shows the schematized cross-section of a conventional 1-perforated, cylindrical grain;
- Fig. 1b: shows the schematized cross-section of a 4-perforated grain with cylindrical grain geometry;
- Fig. 1c: shows the schematized cross-section of a 4-perforated grain with cubic grain geometry;
- Fig. 2: shows the top-view of a 4-perforated cubic propellant grain according to Figure 1c;
- Fig. 3: shows the cross-section of an individual grain from VM 0962/101;
- Fig. 4: shows the cross section of an grain from VM 0963/101;

### Embodiments and examples

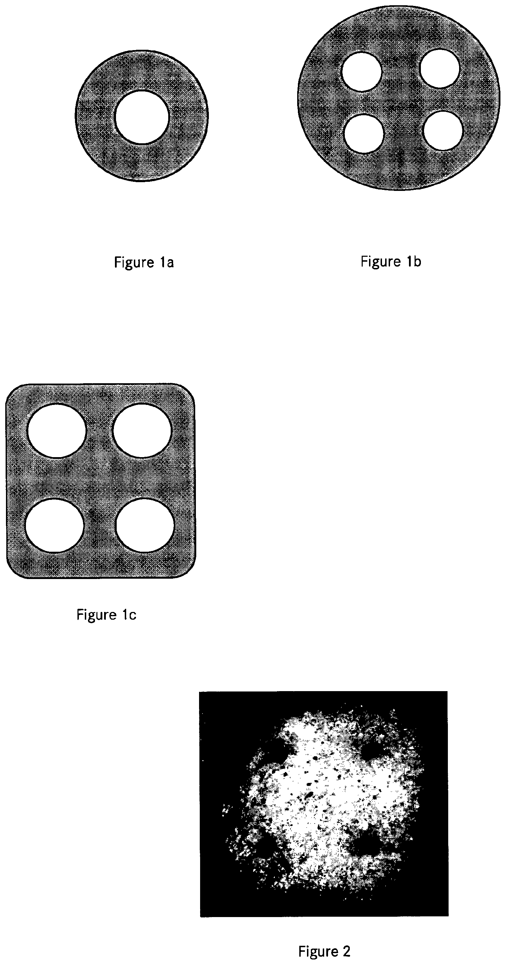

It is evident that, when using e.g. five perforations, the grain profile can either be round or pentagonal. Three perforations would imply a triangular grain profile, six perforations would accordingly have a hexagonal profile. Of course, the grain profile can, independent from the number of perforations, always be round according to Figure 1b.

A unique feature if the multi-perforated grain geometry is the fact that there are two different web sizes, namely the inner web defined as the average distance between the perforations in the center of the grain, and the outer web being the average distance between the perforation and the grain surface. This unique feature might enhance the thermal conversion and be the cause for the observed high ballistic performance of propellants with the new grain geometry.

As noted before, a key element of the invention is the surprising finding that 4 perforations in the grain greatly enhance the interior ballistic output of a nitroglycerine-free high-performing propellant, meaning higher muzzle velocity and lower gas peak pressure for a given charge mass. This means that the high ballistic performance level of generic nitroglycerine-free ECL formulations, which have been proven in numerous medium caliber applications, can for the first time be adapted towards small caliber applications and thereby compete with conventional nitroglycerine-containing in-service propellants. Another surprising finding of the invention lies in the fact that the peak port pressure levels are on average approximately 100 bar higher over the whole temperature range as compared to the conventional 1 perforated grain geometry for small caliber uses.

It was a surprising finding that the rise from 1 perforation to 4 perforations leads to the observed performance increase without changes of the generic ECL propelling formulation. In Table 1 the interior ballistic results of a conventional 1-perforated ECL propellant is compared to a cubic 4-perforated ECL propellant of similar composition. For the 4-perforated type the velocity measured 24 meters in front of the muzzle is 24 m/s higher at a 61 bar lower pressure level. The temperature coefficients for velocity and pressure are very similar for both propellant types. The significantly higher thermal conversion of +8% of the 4 perforated type indicates that the new grain geometry is obviously affecting the burning behavior in a positive way and makes these new propellants more suited for the small caliber systems. This leads to an increase of energy conversion from the energy content of the propellant to muzzle energy of the projectile.

**Table 1**

| | | | Temperature [°C] | -54 | 21 | 70 | -54 | 21 | 70 | |
|---|---|---|---|---|---|---|---|---|---|---|
| Type | Designation | Charge mass [g] | Energy Cont. [J/g] | Velocity @ 24m [m/s] | | | Peak Gas Pressure [bar] | | | Thermal Conv. [%] |
| 1-perf., cylindric | FM 4560 | 1.58 | 3997 | 876 | 900 | 923 | 3570 | 3720 | 3861 | 25.4 |
| 4-perf., cubic | VM 0962/101 | 1.605 | 3869 | 882 | 924 | 946 | 3431 | 3641 | 3782 | 27.5 |

What is even more surprising was the finding that the geometry change yields to a significant improvement of the critical parameter peak port pressure, which goes up by approximately 100 bar as compared to the conventional 1-perforated ECL propellant. An example is given in Table 2.

**Table 2**

| | | Temperature [°C] | -54 | 21 | 70 |
|---|---|---|---|---|---|
| Type | Designation | Charge mass [g] | Peak Port Pressure [bar] | | |
| 1-perf., cylindric | FM 4560 | 1.58 | 986 | 1060 | 1112 |
| 4-perf., cubic | VM 0962/101 | 1.605 | 1100 | 1221 | 1273 |

Another surprising element of the invention is the finding that the bulk density of the grain propellant improves by switching from the conventional cylindrical grain geometry to a cubic geometry. This can be seen in Table 1, where the cubic 4-perforated type allows for a higher charge mass as compared to the 1-perforated cylindrical type. It was found that this effect does not occur for unfinished propellant grains, probably due to their rough surfaces. However, after finishing and glazing, the propellant surface is very shiny and smooth. This might allow the individual propellant grains to align their surfaces. This effect reduces the empty volume in the propellant bed and leads to a higher packaging density.

Table 3 illustrates how the bulk density of nitroglycerine-free grain propellants with the same generic formulation is affected by the grain shape. Two surprising findings can be seen: Firstly, for 4-perforated grain geometry, the cubic grain shape leads to higher bulk density as compared to conventional cylindrical shape. Additionally, for cylindrical grain shapes, 4 perforations lead to higher bulk density as compared to only 1 perforation.

**Table 3**

| | Designation | Diameter | Length | Perforation | Bulk Density |
|---|---|---|---|---|---|
| | | [mm] | [mm] | [mm] | [g/l] |
| 4-perf. cubic grain shape | VM 0962/101 | 0.87 | 1.14 | 0.09 | 963 |
| 4-perf. cylindric grain shape | VM 0963/101 | 0.87 | 1.11 | 0.07 | 937 |
| 1-perf. cylindric grain shape | FM 4560 | 0.75 | 1.06 | 0.07 | 915 |

The diameter of the 4-perforated grains according to the invention, measured as true diameter for the cylindrical grains (Figure 1b) or as side length for the cubic grains (Figure 1c), is determined by the targeted application, e.g. the projectile caliber and weight. For the envisioned small caliber applications it lies between 0.5 to 5mm, preferably 0.5 to 2mm. The length of the propellant grain is typically 0.5 to 5 times the size of the grain diameter, preferably 0.5 to 2.5 times. The dimension of the perforations in the grain must be large enough that the flame front can penetrate throughout the whole channel and take use of the surface area during the burning cycle of the propellant, but not too big in order to prevent excessive empty volume and therefore lower bulk density. According to the invention, the diameters of the perforations are between 0.03 to 0.3mm, preferably between 0.05 to 0.2mm. Further, according to the invention, the diameters of the perforations are of similar size.

The propellant formulation and the coating parameters are basically the same as described in EP 1857429 (A1). The propulsion system contains nitrocellulose as the base material as well as a crystalline energy carrier on a nitramine base. Additionally, it contains one or a plurality of inert plasticizers, which can be localized in the grain matrix and/or in an increased concentration in the zones near the grain surface.

A further great advantage of the propulsion system according to the invention is the surprising finding that the velocity drop towards extreme cold firing temperatures and the velocity rise towards extreme hot firing temperatures can be tuned by the amount of deterrent applied into the zones near the grain surface. This is shown in Table 4, which shows the velocity slopes towards extreme hot (+70°C) and extreme cold (-54°C) firing temperatures for four different 4-perforated propellants with different deterrent concentrations. The correlations with the slopes of the corresponsive gas pressure values are lower. This effect can be used to optimize the temperature characteristics of the propellant for a specific application, meaning to minimize the changes of ballistic output (velocity and to a lesser degree gas pressure) by changing the powder bed temperature over a wide temperature range.

**Table 4**

| | Designation | Grain Diameter | Perforation Diameter | Deterrent | Slope Velocity hot | Slope Velocity cold |
|---|---|---|---|---|---|---|
| | | | [mm] | [%] | [ms⁻¹/°C] | [ms⁻¹/°C] |
| Propellant 1 | VM 0962/101 | 0.87 | 0.09 | 4.0 | 0.44 | 0.56 |
| Propellant 2 | MIK VM 0973 | 0.87 | 0.10 | 3.2 | 0.48 | 0.64 |
| Propellant 3 | MIK VM 0971 | 0.87 | 0.12 | 2.8 | 0.54 | 0.67 |
| Propellant 4 | MIK VM 0972 | 0.87 | 0.08 | 2.3 | 0.67 | 0.68 |
| Linear Correlation | | | | | 0.86 | 0.89 |

### Example 1: VM 0962/101

In a horizontal kneader with approx. 30 liters volume were placed 14.2kg of nitrocellulose (13.25% N, wetted with approx. 25% ethanol and 3% water), 5.0kg of hexogen with an average particle size of 6.8 micrometer, 240g Akardite-2 and 300g potassium sulfate as the key components, together with 20kg of a mixture of ethanol and diethyl ether.

Kneading was allowed to proceed for 90 minutes total time. For the last 40 minutes an air stream was blowing through the kneader for partial solvent removal. Afterwards the dough was extruded through a die according to Figure 1c with 1.3mm side length and 0.15mm pin diameter. After extrusion, the grains were pre-dried, cut and bathed for solvent removal. Then the grain propellant was transferred into a sweety barrel heated to 60°C and treated with a solution of 800g of a low molecular weight deterrent dissolved in dilute ethanol according EP 1857429 (A1). Glazing was done using 40g graphite.

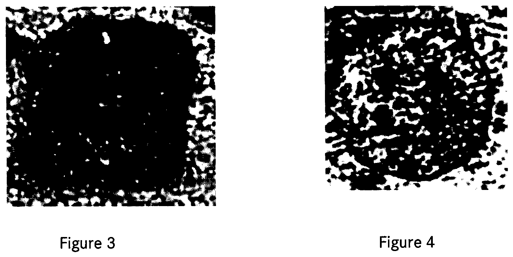

Physical data: Length: 1.14mm, side length: 0.87mm, inner web: 0.39mm, outer web: 0.23mm, perforation width: 0.09mm, energy content: 3869J/g, bulk density: 963g/l, water: 0.57%. Figure 3 shows the cross-section of an individual grain from VM 0962/101.

### Example 2: VM 0963/101

The dough composition was exactly the same as in Example 1. The only difference was the die form, which in this case was 4-perforated with a round shape according to Figure 1b having a diameter of 1.3mm and a pin diameter of 0.15mm. After extrusion, the following processes, including cutting, bathing, surface treatment with deterrent, and glazing with graphite, were exactly the same as in Example 1.

Physical data: Length: 1.1 1mm, diameter: 0.87mm, inner web: 0.34mm, outer web: 0.19mm, perforation: 0.07mm, energy content: 3912J/g, bulk density: 937g/l, water: 0.54%. Figure 4 shows the cross section of an grain from VM 0963/101.

### Example 3: FM 4560 (comparison sample 1-perforated)

The dough composition was basically the same as in Example 1 with the exception that only 4.0kg of hexogen and 400g of low molecular weight deterrent was used, which was compensated with 15.6kg nitrocellulose. The dough was extruded through a conventional 1-perforated round die according to Figure 1a with a diameter of 1.1mm and a pin diameter of 0.20mm.

Physical data: Length: 1.06mm, diameter: 0.75mm, web: 0.34mm, perforation: 0.07mm, energy content: 3997J/g, bulk density: 915g/l, water: 0.60%.

## Claims

1. Propelling system for acceleration of projectiles based on nitrocellulose, containing a crystalline energy carrier on nitramine base in concentrations from 0 - 35% and an inert plasticizer, which is extruded through a die with multiple perforations, **characterized in that** the number of axial perforations is 4, wherein the grain structure has a cubic or a cylindrical shape and the axial perforations have a round cross-section with diameters between 0.03 - 0.3 mm, preferably between 0.05 - 0.2 mm, and wherein the diameters of the perforations are of similar size.

2. Propelling system according to claim 1 with multiple perforations in axial direction, where the crystalline nitramine compound contains the structural element of the general chemical formula -NH-NO₂.

3. Propelling system according to one of claims 1 to 2, where the crystalline nitramine compound is used in concentrations from 5 - 25%.

4. Propelling system according to one of claims 1 to 3, where the crystalline nitro compound is hexogen (RDX, cyclotrimethylentrinitramin, CAS-# 121-82-4), octogen (HMX, tetramethylenetetranitramin, CAS-# 2691-41-0, hexanitroisowurtzitane (CL-20, CAS-# 14913-74-7), nitroguanidine (NIGU, NQ, CAS-# 70-25-7, N-Metylnitramine (Tetryl, N-Methyl-N,2,4,6-tetranitrobenzolamin, CAS-# 479-45-8, or a combinationen therefrom.

5. Propelling system according to one of claims 1 to 4, containing an inert plasticizing additive compound, which is homogeneously dispersed through the grain matrix.

6. Propelling system according to one of claims 1 to 5, where the concentration of the inert plasticizing additive compound in the grain matrix is in the range of 0 - 10%.

7. Propelling system according to one of claims 1 to 6, where the concentration of the inert plasticizing additive compound in the grain matrix is in the range of 0 - 5%.

8. Propelling system according to one of claims 1 to 7, where the inert plasticizing additive compound in the grain matrix is a practically water insoluble polyoxo-compound as e.g. a polyester or polyether compound with a molecular weight of 50 - 20'000 g/mol.

9. Propelling system according to one of claims 1 to 8, where the inert plasticizing additive compound in the grain matrix is a practically water insoluble citric ester, adipinic ester, sebacinic ester or phthalic ester with a molecular weight of 100 - 20'000 g/mol or combinations therefrom.

10. Propelling system according to claim 8, where the inert plasticizing additive compound is accumulated in the surface areas of the propellant grain with a penetration depth up to 300 micrometer from the inner (in perforations) and outer (grain surface) surface areas.

11. Method for producing multi-perforated propellants according to claim 1, involving placing nitrocellulose, a crystalline energy carrier on nitramine base and an inert plasticizer as the main components in a kneader, kneading in the presence of an organic solvent combination, extrusion through a multi-perforated die, pre-drying, cutting, bathing, surface treating with deterrent and glazing with graphite as the key process steps, the sequence of which can modify depending on the specific requirements put on the multi-perforated propellant.

12. Use of multi-perforated propellant system according to claim 1 for accelerating small-caliber and mortar projectiles.

## Patentansprüche

1. Antriebssystem zur Beschleunigung von Geschossen auf Basis von Nitrocellulose, das einen kristallinen Energieträger auf Nitraminbasis in Konzentrationen von 0 - 35% und einen inerten Weichmacher enthält, der durch eine Matrize mit mehreren Perforationen extrudiert wird, **dadurch gekennzeichnet, dass** die Anzahl der axialen Perforationen 4 beträgt, wobei die Kornstruktur eine kubische oder zylindrische Form aufweist und die axialen Perforationen einen runden Querschnitt mit Durchmessern zwischen 0,03 - 0,3 mm, vorzugsweise zwischen 0,05 - 0,2 mm aufweisen und wobei die Durchmesser der Perforationen von ähnlicher Größe sind.

2. Antriebssystem nach Anspruch 1 mit mehreren Perforationen in axialer Richtung, wobei die kristalline Nitraminverbindung das Strukturelement der allgemeinen chemischen Formel -NH-NO₂ enthält.

3. Antriebssystem nach einem der Ansprüche 1 bis 2, wobei die kristalline Nitraminverbindung in Konzentrationen von 5 - 25% verwendet wird.

4. Antriebssystem nach einem der Ansprüche 1 bis 3, wobei die kristalline Nitroverbindung Hexogen (RDX, Cyclotrimethylentrinitramin, CAS-# 121-82-4), Octogen (HMX, Tetramethylentetranitramin, CAS-# 2691-41-0), Hexanitroisowurtzitan (CL-20, CAS-# 14913-74-7), Nitroguanidin (NIGU, NQ, CAS-# 70-25-7), N-Methylnitramin (Tetryl, N-Methyl-N,2,4,6-tetranitrobenzolamin, CAS-# 479-45-8) oder eine Kombination davon ist.

5. Antriebssystem nach einem der Ansprüche 1 bis 4, das eine inerte plastifizierende Additivverbindung enthält, die homogen in der Kornmatrix verteilt ist.

6. Antriebssystem nach einem der Ansprüche 1 bis 5, wobei die Konzentration der inerten plastifizierenden Additivverbindung in der Kornmatrix im Bereich von 0 - 10% liegt.

7. Antriebssystem nach einem der Ansprüche 1 bis 6, wobei die Konzentration der inerten plastifizierenden Additivverbindung in der Kornmatrix im Bereich von 0 - 5% liegt.

8. Antriebssystem nach einem der Ansprüche 1 bis 7, wobei die inerte plastifizierende Additivverbindung in der Kornmatrix eine praktisch wasserunlösliche Polyoxoverbindung ist, wie z.B. eine Polyester- oder Polyetherverbindung mit einem Molekulargewicht von 50 - 20.000 g/mol.

9. Antriebssystem nach einem der Ansprüche 1 bis 8, wobei die inerte plastifizierende Additivverbindung in der Kornmatrix ein praktisch wasserunlöslicher Zitronensäureester, Adipinsäureester, Sebacinsäureester oder Phthalsäureester mit einem Molekulargewicht von 100 - 20.000 g/mol ist oder Kombinationen davon.

10. Antriebssystem nach Anspruch 8, wobei sich die inerte plastifizierende Additivverbindung in den Oberflächenbereichen des Treibmittelkorns ansammelt, mit einer Eindringtiefe bis zu 300 Mikrometer von den inneren (in Perforationen) und äußeren (Kornoberfläche) Oberflächenbereichen.

11. Verfahren zur Herstellung von mehrfach perforierten Treibmitteln nach Anspruch 1, welches das Überführen von Nitrocellulose, eines kristallinen Energieträgers auf Nitraminbasis und eines inerten Weichmachers als Hauptbestandteile in einen Kneter, Kneten in Gegenwart einer organischen Lösemittelkombination, Extrusion durch eine mehrfach perforierte Matrize, Vortrocknen, Schneiden, Baden, Oberflächen-behandeln mit Abschreckmittel und Lasieren mit Graphit als Schlüsselverfahrensschritte umfasst, deren Reihenfolge sich je nach den spezifischen Anforderungen an das mehrfach perforierte Treibmittel ändern kann.

12. Verwendung eines mehrfach perforierten Treibmittelsystems nach Anspruch 1 zum Beschleunigen von Kleinkaliber- und Mörsergeschossen.

## Revendications

1. Système de propulsion pour l'accélération de projectiles sur la base de nitrocellulose, contenant un porteur d'énergie cristallin sur une base de nitramine à des concentrations de 0 à 35 % et un plastifiant inerte, qui est extrudé à travers une filière avec des perforations multiples, **caractérisé en ce que** le nombre de perforations axiales est de 4, dans lequel la structure de grain a une forme cubique ou cylindrique et les perforations axiales ont une section transversale ronde avec des diamètres compris entre 0,03 à 0,3 mm, de préférence entre 0,05 et 0,2 mm, et dans lequel les diamètres des perforations sont de taille similaire.

2. Système de propulsion selon la revendication 1 avec des perforations multiples dans la direction axiale, dans lequel le composé de nitramine cristallin contient l'élément structural de formule chimique générale -NH-NO₂.

3. Système de propulsion selon l'une des revendications 1 et 2, dans lequel le composé de nitramine cristallin est utilisé à des concentrations de 5 à 25 %.

4. Système de propulsion selon l'une des revendications 1 à 3, dans lequel le composé nitro cristallin est l'hexogène (RDX, cyclotriméthylènetrinitramine, CAS n° 121-82-4), l'octogène (HMX, tétraméthylènetétranitramine, CAS n° 2691-41-0, hexanitroisowurtzitane (CL-20, CAS n° 14913-74-7), nitroguanidine (NIGU, NQ, CAS n° 70-25-7, la N-métylnitramine (tétryle, N-Méthyl-N,2,4,6-tétranitrobenzolamine, CAS n° 479-45-8, ou une combinaison de ceux-ci.

5. Système de propulsion selon l'une des revendications 1 à 4, contenant un composé additif plastifiant inerte, qui est dispersé de façon homogène dans la matrice de grain.

6. Système de propulsion selon l'une des revendications 1 à 5, dans lequel la concentration du composé additif plastifiant inerte dans la matrice de grain est dans la plage de 0 à 10 %.

7. Système de propulsion selon l'une des revendications 1 à 6, dans lequel la concentration du composé additif plastifiant inerte dans la matrice de grain est dans la plage de 0 à 5 %.

8. Système de propulsion selon l'une des revendications 1 à 7, où le composé additif plastifiant inerte dans la matrice de grain est un composé polyoxo pratiquement insoluble dans l'eau tel que, par exemple, un composé polyester ou polyéther ayant un poids moléculaire de 50 à 20 000 g/mol.

9. Système de propulsion selon l'une des revendications 1 à 8, dans lequel le composé additif plastifiant inerte dans la matrice de grain est un ester citrique, ester adipinique, ester sébacinique ou ester phtalique ayant un poids moléculaire de 100 à 20 000 g/mol ou des combinaisons de ceux-ci.

10. Système de propulsion selon la revendication 8, dans lequel le composé additif plastifiant inerte est accumulé dans les zones de surface du grain de propulseur avec une profondeur de pénétration allant jusqu'à 300 micromètres depuis les zones de surface internes (dans les perforations) et externes (surface de grain).

11. Procédé de production de propulseurs multiperforés selon la revendication 1, mettant en œuvre le placement de nitrocellulose, un porteur d'énergie cristallin à base de nitramine et un plastifiant inerte en tant que composants principaux dans un malaxeur, le malaxage en présence d'une combinaison de solvants organiques, l'extrusion à travers une filière multiperforée, un préséchage, une coupe, un bain, un traitement de surface avec un répulsif et un glaçage avec du graphite en tant que principales étapes de procédé, dont la séquence peut varier suivant les exigences spécifiques appliquées au propulseur multiperforé.

12. Utilisation d'un système de propulseur multiperforé selon la revendication 1 pour accélérer des petits projectiles de petit calibre et de mortier.
